# EUROPÄISCHE PATENTSCHRIFT

(11) **EP 1 308 380 B1**
(45) Veröffentlichungstag und Bekanntmachung des Hinweises auf die Patenterteilung: **20.09.2006**
(21) Anmeldenummer: 02405906.5
(22) Anmeldetag: 23.10.2002
(51) Int. Cl.: B62H 3/10, B62H 3/08

(54) **Einstellvorrichtung für Fahrräder**
Support device for bicycle
Dispositif de support pour bicyclette

(30) Priorität: 26.10.2001 CH 19722001
(43) Veröffentlichungstag der Anmeldung: 07.05.2003
(73) Patentinhaber: Weber, Karl, CH-8620 Wetzikon (CH)
(72) Erfinder: Weber, Karl, CH-8620 Wetzikon (CH)
(74) Vertreter: Troesch Scheidegger Werner AG

(56) Entgegenhaltungen:
- DE-A- 19 537 078
- DE-A- 19 920 779
- FR-A- 2 766 784
- US-A- 5 278 538

## Beschreibung

### Technisches Gebiet

Die Erfindung bezieht sich auf eine Einrichtung von Fahrrädern im privaten oder öffentlichen Raum und als Einzel- oder Grossanlagen. Dabei werden den speziellen Anforderungen an den Benutzerkomfort und an die Sicherheit höchste Beachtung geschenkt.

### Stand der Technik

Auf dem Markt gibt es verschiedene Vorrichtungen von Fahrradhaltern, die im wesentlichen in zwei Gruppen unterteilt werden können.

Die einfachsten Vorrichtungen benutzen, sowohl für die Halterung als auch die Sicherung mittels Ring- oder Bügelschlösser, das Vorderrad des Fahrrades. Sie zeichnen sich durch geringe Bautiefe und einfache Konstruktion aus. Nachteilig wirkt sich indes die grosse Hebelwirkung der Fahrradlänge auf den kurzen Halteoder Klemmbereich aus. Zum Anbringen der Sicherung zwischen Halter und Fahrrad muss der Benutzer zwischen die abgestellten Fahrräder hineintreten und schiebt das Nachbarrad zwangsläufig zur Seite. Dieser Umstand führt immer wieder zu Beschädigungen der seitlich abgestellten Fahrräder.

Die zweite Gruppe von Einstellvorrichtungen ermöglicht es dem Benutzer, die Fahrräder seitlich an geländer- oder bügelartigen Konstruktionen anzulehnen und mittels Sicherungen daran zu befestigen. Diese Einrichtungen bestehen in der Regel aus aufwendigen Konstruktionen mit entsprechend grossen Stellflächen. Auch hier behindern sich die gegenseitig angelehnten Fahrräder beim Ein- und Ausparkieren.

Bei beiden Gruppen zeigen sich neuerdings immer mehr Probleme mit den neuesten Generationen von Fahrrädern. Breite Federgabeln, Scheibenbremsen und faltbare Gepäckträger an den Radseiten erschweren oder verhindern die Nutzung in konventionellen Fahrradständern.

Aus den Patenten CH 668 400 und ist ein Fahrradständer bekannt, dessen Halterung über den Pedalbügel erfolgt. Da diese Halterung in einem genau festgelegten Winkel zu der Padalachse angebracht ist und sich der Pedalbügel nur in diesem Winkel einstellen lässt, ist die Nutzung des Systems recht kompliziert. Unterschiedliche Grössen oder Arten von Fahrrädern können ebenfalls zu Problemen führen.

### Darstellung der Erfindung

Die heutigen Fahrräder zeichnen sich durch teilweise sehr grosse technische Unterschiede aus. Nicht nur die Grösse (Erwachsene, Kinder) sondern auch ihre Funktion als Citybike, Mountenbike, Renner, Allrounder usw. haben sowohl in den Abmessungen der Rahmen und Räder als auch in denen von Lenker, Pedalen und Sitzvorrichtung grosse Unterschiede. Die Erfindung greift aus diesen Variablen einen Punkt heraus der immer auf einer identischen Ebene und einem bestimmten Kreis liegt. Dieser Punkt ist die Verbindungsachse zwischen Pedalbügel und Fusspedal. Achsdurchmesser und Schlüsselweite als Abstand sind bei allen Fahrrädern praktisch identisch. Die Erfindung verwendet diesen Punkt als einzigen Fixpunkt für die Befestigung des Fahrrades. Die Achse zwischen Pedalbügel und Fusspedal ist aus ergonomischen Gründen immer in einem bestimmten Abstand zur Fahrradachse und gleichzeitig immer breiter als Rad-, Brems- oder Antriebsteile des Fahrrades. Auch die Distanz zum Boden ist bei diesem Teil bei allen Rädern praktisch gleich. Durch den Leerlauf des Antriebes kann dieser Punkt auch unabhängig von der Grösse oder dem Fahrradtyp auf eine bestimmte Höhe positioniert werden. Der Umstand, dass durch den Antrieb des Fahrrades die Vorwärtsdrehung des Pedals immer nur unter Kraft, die Rückwärtsbewegung jedoch immer ohne Kraft erfolgt, nutzt der Erfinder dafür aus, dass das Fahrrad ohne Kraft in die Halterung eingeschoben werden kann, aber nur mit Kraft wieder aus dieser herausgezogen werden muss.

In der bevorzugten Darstellung der Erfindung gemäß Anspruch 1 wird die Einstellvorrichtung aus einem oder mehreren Blechteilen geformt und in ein- oder gegenseitigen Reihen aneinander montiert. Die eigentliche Erfindung der Pedalhalterung kann aber auch in anderen Materialien oder in einer Kombination von verschiedenen Materialien hergestellt werden. Wesentliche Merkmale der Erfindung sind der Schlitz für die Pedalhalterung.

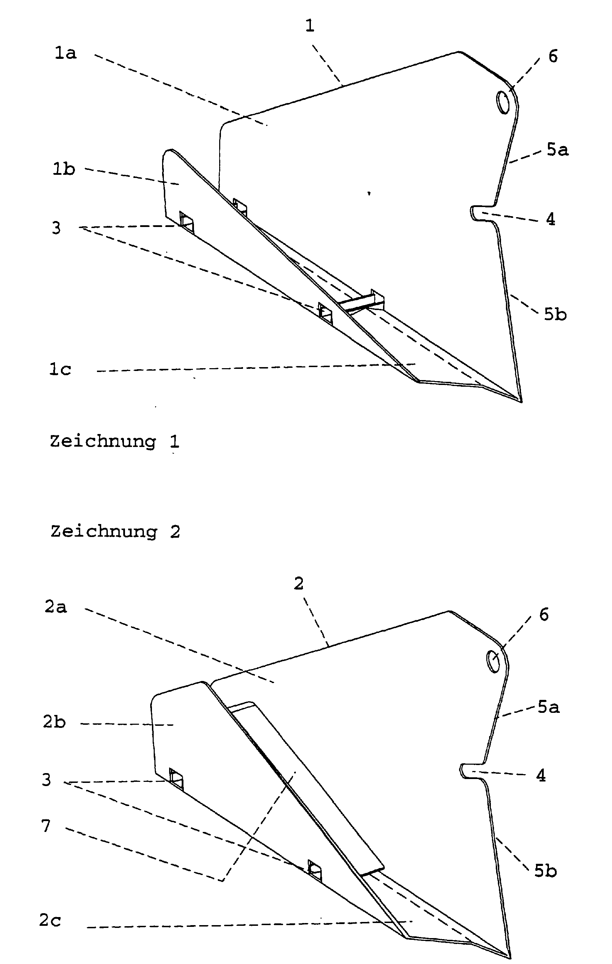

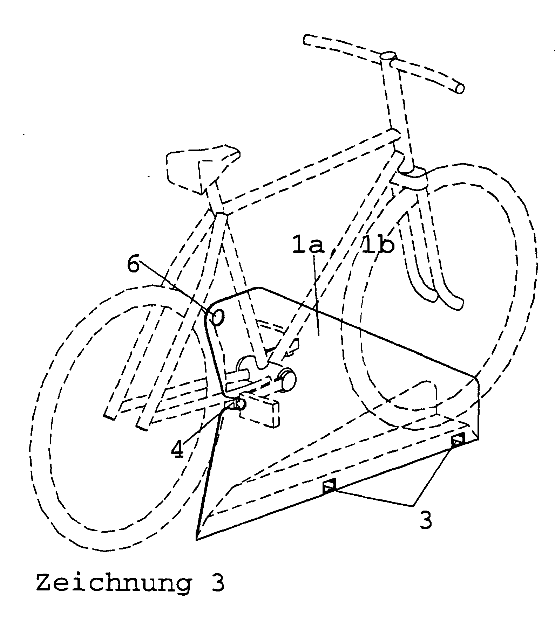

## Patentansprüche

1. Einrichtung zum sicherbaren Einstellen von Fahrrädern, **gekennzeichnet durch** eine Einstellvorrichtung aus einem oder mehreren Blechteilen, aufweisend eine Pedalhalterung in Form eines Schlitzes (4) für die Aufnahme der Verbindung zwischen Pedalbügel und Fusspedal.

2. Einrichtung nach Anspruch 1, **dadurch gekennzeichnet, dass** die Einrichtung aus einer U-Profil ähnlichen ein- oder mehrteiligen Blechkonstruktion (1, 2) besteht, in welche das Fahrrad in Längsrichtung einführbar ist.

3. Einrichtung nach Anspruch 2, **dadurch gekennzeichnet, dass** das U-Profil Schenkelflächen aufweist (1a, 1b, 2a, 2b), welche unterschiedlich hoch ausgeformt sind.

4. Einrichtung nach Anspruch 3, **dadurch gekennzeichnet, dass** die längere Schenkelfläche des U-Profils wahlweise auf der linken oder rechten Seite des U-Profils angeordnet ist.

5. Einrichtung nach einem der Ansprüche 3, 4, **dadurch gekennzeichnet, dass** die Pedalhalterung im höheren Schenkel (1a, 2a) angeordnet ist für die Aufnahme der Achse zwischen Pedalbügel und Fusspedal und dass das Fahrrad sowohl in Längsrichtung, wie auch seitlich fest positionierbar ist.

6. Einrichtung nach Anspruch 5, **dadurch gekennzeichnet, dass** der Schlitz (4) in einem Winkel angeordnet ist, derart, dass ein selbsttätiges Zurückrollen des Fahrrades über die Gegenkraft des Antriebes vom Fahrrad, verhinderbar ist.

7. Einrichtung nach einem der Ansprüche 3-6, **dadurch gekennzeichnet, dass** derjenige Schenkel (1a, 2a) enthaltend den Schlitz (4) derart v-förmig gegen den Schlitz hin ausgeformt ist, dass sich die Achse zwischen Pedalbügel und Fusspedal beim Hineinschieben des Fahrrades in die Einrichtung selbstständig durch den Leerlauf des Kettenantriebes in den Schlitz (4) hineindreht.

8. Einrichtung nach einem der Ansprüche 2-7, **dadurch gekennzeichnet, dass** die Basis des U-Profils (1c, 2c) quer zur Fahrtrichtung des Fahrrades derart geneigt ausgebildet ist, dass bei der Aufnahme des Vorderrades das Rad insbesondere in Fahrtrichtung verdrehsicher positionierbar ist.

9. Einrichtung nach einem der Ansprüche 3-8, **dadurch gekennzeichnet, dass** auf der Basis des U-Profils eine rampenartige Einrichtung (7) vorgesehen ist und dass die niedrige Schenkelfläche (2b) des U-Profils derart erhöht ausgebildet ist, dass das Vorderrad in eine höhere Position einfahr- und verdrehsicher positionierbar ist.

10. Einrichtung nach einem der Ansprüche 1-9, **dadurch gekennzeichnet, dass** eine Verriegelung vorgesehen ist, um die Pedalachse im Schlitz (4) gegen Diebstahl zu sichern, wobei die Verriegelung mechanisch, elektromechanisch, elektronisch mit Schlüssel, Münzautomat oder Kartenstation bedienbar ist.

11. Einrichtung nach einem der Ansprüche 1-10, **dadurch gekennzeichnet, dass** an der Blechkonstruktion eine Ausformung (6) vorgesehen ist, zum Sichern des Fahrrades.

12. Anordnung aufweisend mehrere Einrichtungen nach einem der Ansprüche 1-11, **dadurch gekennzeichnet, dass** die Einrichtungen mittels Querverbindungen (3) in Reihen nebeneinander oder gegeneinander zusammenbaubar sind.

## Claims

1. Equipment to ensure secure positioning of bicycles, **characterised by** a setting device made from one or several sheet metal components and presenting a pedal fitting in the form of a slot (4) for the supporting of the connection between the pedal holder and the foot pedal.

2. Equipment according to claim 1, **characterised in that** the equipment exists in the form of a U profile-like, single or multi-part metal plate construction (1,2) into which the bicycle can be inserted lengthwise.

3. Equipment according to claim 2, **characterised in that** the U profile comprises shank sections (1a, 1b, 2a, 2b) which are shaped in differing heights.

4. Equipment according to claim 3, **characterised in that** the longer shank section of the U profile is alternatively arranged on the left or the right side of the U profile.

5. Equipment according to claims 3 or 4, **characterised in that** the pedal fitting is arranged on the higher level shank (1a, 2a) to support the axle between the pedal holder and foot pedal, and **in that** the bicycle can be firmly positioned, lengthwise as well as laterally.

6. Equipment according to claim 5, **characterised in that** the slot (4) is arranged in an angle in such a way as to ensure that the uncontrolled rolling back of the bicycle is prevented due to the counteracting force of the forwards mechanism of the bicycle.

7. Equipment according to one of claims 3-6, **characterised in that** the shank (1a, 2a) containing the slot (4) is designed in a V shape to extend against the slot in such a way that on inserting the bicycle into the equipment, the axle between the pedal holder and foot pedal turns into the slot (4) independently due to the idling of the chain mechanism.

8. Equipment according to one of claims 2-7, **characterised in that** the base of the U section (1c, 2c) is diagonally inclined and facing towards the direction of travel of the bicycle in such a way that on inserting the front wheel, the wheel can be positioned without being twisted, in particular in the direction of travel.

9. Equipment according to one of claims 3-8, **characterised in that** a ramp shaped fixture (7) is provided on the base of the U profile and that the lower level shank (2b) of the U profile is elevated in such a way as to ensure that the front wheel can be positioned at a higher position, securely insertable and without being twisted.

10. Equipment according to one of claims 1-9, **characterised in that** a locking mechanism is provided in order to secure the pedal axle in the slot (4) against theft, with the locking mechanism being operated mechanically, electromechanically, or electronically with a key, slot machine or memory card.

11. Equipment according to one of claims 1-10, **characterised in that** a moulded bracket (6) is provided on the metal plate construction for the securing of the bicycle.

12. Arrangement comprising several pieces of equipment in accordance with either one of claims 1-11, **characterised in that** the equipment can be fitted in rows, either adjacent to each other or facing towards each other, with the use of interconnecting components(3).

## Revendications

1. Installation de stationnement sécurisé pour vélos, **caractérisé par** un dispositif de réglage composé d'un ou plusieurs éléments en tôle, comprenant un support pédales en forme de cran (4) destiné à la réception de la jonction entre le boîtier de pédalier et la pédale.

2. Installation suivant la revendication 1, **caractérisée en ce qu'**elle comprend une construction en tôle composé d'un ou plusieurs éléments resemblant à un profil en U(1,2) dans laquelle le vélo peut être introduit longitudinalement.

3. Installation suivant la revendication 2, **caractérisée en ce que** le profil en U comprend des ailes (1a, 1b, 2a, 2b) de differente hauteur.

4. Installation suivant la revendication 3, **caractérisée en ce que** l'aile la plus longue du profil en U est placée au choix du côté gauche ou droit du profil en U.

5. Installation suivant une des revendications 3 ou 4, **caractérisée en ce que** le support pédales est situé dans l'aile ayant la plus grande hauteur (1a, 2a) pour la réception de l'axe qui se trouve entre le boîtier de pédalier et la pédale et **en ce que** le vélo peut être positionné de manière immobile aussi bien longitudinalement que latéralement.

6. Installation suivant la revendication 5, **caractérisée en ce que** le cran (4) est disposé dans un angle, de sorte à pouvoir empêcher le vélo de rouler par elle-même en arrière dû à la force de réaction engendrée par l'entraînement du vélo.

7. Installation suivant une des revendications 3 - 6, **caractérisée en ce que** l'aile (1a, 2a) muni du cran (4) est façonné en forme de V en direction du cran, de sorte que l'axe situé entre le boîtier de pédalier et la pédale s'engage automatiquement dans le cran (4) lorsque la chaîne tourne à vide en plaçant le vélo dans l'installation.

8. Installation suivant une des revendications 2 - 7, **caractérisée en ce que** la base du profil en U (1c, 2c) est placée transversalement par rapport au sens de marche du vélo et inclinée de sorte à pouvoir bloquer la roue avant notamment dans le sens de marche du vélo lors de son positionnement dans l'installation.

9. Installation suivant une des revendication 3 - 8, **caractérisée en ce qu'**un aménagement en forme de rampe (7) est prévu sur la base du profil en U et **en ce que** l'aile du profil en U ayant la hauteur plus faible (2b) est formée de manière surélevée telle qu'à permettre de placer la roue avant dans l'installation dans une position surélevée bloquée.

10. Installation suivant une des revendications 1 - 9, **caractérisée en ce qu'**un mécanisme de verrouillage est prévu, afin de protéger l'axe de pédale placé dans le cran (4) contre le vol, ce verrouillage pouvant être commandé mécaniquement, de manière électromécanique ou électroniquement au moyen d'une clé, d'un collecteur de monnaie ou d'une station à cartes.

11. Installation suivant une des revendications 1-10, **caractérisée par** des moyens (6) prévus dans la construction en tôle servant à sécuriser le vélo.

12. Arrangement comprenant une pluralité d'installations suivant l'une des revendications 1 - 11, **caractérisée en ce que** lesdites installations peuvent être assemblés en rangées, les unes à côté des autres ou les unes contre les autres au moyen d'éléments de liaison transversales (3).
